# EUROPEAN PATENT APPLICATION

(11) **EP 2 698 687 A1**
(43) Date of publication of application: **19.02.2014**
(21) Application number: 12842419.9
(22) Date of filing: 17.10.2012
(51) Int. Cl.: G06F 3/033, A61H 23/02

(54) **COMPUTER MOUSE INTEGRATED WITH MASSAGER**

(30) Priority: 19.10.2011 JP 2011243904
(71) Applicant: Art-Factory Co. Ltd., Tokyo 150-0043 (JP)
(72) Inventor: AKIHISA, Yuichi, Tokyo 150-0043 (JP); SUZUKI, Fumihiko, Hamamatsu-shi Shizuoka 430-0901 (JP)
(74) Representative: TBK
(86) International application number: PCT/JP2012/076790
(87) International publication number: WO 2013/058266

(57) **Abstract**

In a conventional computer mouse integrated with a massager, it is necessary to hold the mouse by a hand when massaging the other body positions than a palm. A massager integrated type optical computer mouse is structured such that a bottom surface portion of the optical computer mouse is formed so as to be depressed as a concave shape to a main body side, a massaging vibrator is arranged in a protruding manner at the concavely depressed position, and any one of operational switches of the computer mouse is changed to a switch for turning on or off a power supply to the massaging vibrator, and changing a vibration pattern, by a selection switch. Accordingly, an operator can bring the concavely depressed position of the computer mouse into close contact with an approximately convex body position so as to massage while gripping the computer mouse by a palm.

## Description

### BACKGROUND OF THE INVENTION

### Field of the Invention

The present invention relates to a computer mouse with massaging function.

### Description of the Conventional Art

A personal computer has been sufficiently widespread in business and daily life, and a lot of people come face to face with the personal computer not a little in a day so as to carry out an operation.

The operation of the personal computer is carried out mainly by a personal computer main body, a monitor screen, a keyboard and a computer mouse (hereinafter, called as a mouse) on the basis of a visual operation, a key operation of both hands and a mouse operation. In many cases, the personal computer on a desk is operated in a posture in which an operator sits on a chair.

The operation mentioned above has not been changed so much from a popularization period of the personal computer. In many cases, stress and pain are generated not only in eyes but also in hands, shoulders, neck and lower back together with an elongation of an operating time, there has been seen on a daily basis a scene that the operator massages the body positions mentioned above by own hands while taking a break in the operation of the personal computer.

On the other hand, a lot of auxiliary tools for massaging have been provided on the market, and most of the auxiliary tools have been provided as a dedicated device which has a vibration (a vibration generator caused by an eccentric rotation of a transducer) built-in, and is devised in an operability and a design.

However, the dedicated massager is prepared independently in the case that the massager is intended to be used when the operator operates the personal computer. In the case of an office, the dedicated massager is not generally used for the reason of a space for keeping the device and consideration for the surroundings due to the use of the dedicated massager, under the actual conditions.

The above fact is caused by the dedicated massager. The independent massager is not familiarized with the personal computer relevant devices and the personal computer peripheral devices and is alien thereto. From these reasons, there has not been generally provided a simple device which is preferable for the operator of the personal computer to massage the position of the arms, the shoulders and the neck at the resting time of the personal computer operation so as to revive fatigue, but the operator unavoidably massages by own hands.

On the contrary, a technical idea that a massaging function is attached to a mouse by paying attention to the mouse which is operated by using a hand in the personal computer peripheral devices has been known in Japanese Unexamined Patent Publication No. 10-133812, Japanese Unexamined Patent Publication No. 2002-14769, U.S. Patent No. 6323841B1, U.S. Patent Application Publication No. 2004/189606, U.S. Patent Application Publication No. 2006/192756, and U.S. Patent Application Publication No. 2007/188451.

### SUMMARY OF THE INVENTION

### Problem to be Solved by the Invention

These known techniques in which the massaging function is added to the mouse conform to fatigue absorbing needs by the massaging in the personal computer operator mentioned above. The technique in the U.S. Patent No. 6323841B1 embeds a massager (a pad) achieved by a vibration of a transducer in a main body, however, is structured such that the massager portion can be separated from a mouse body, and is structured such that a power supply of the massager is turned off in the case that the massager portion is integrated with the mouse, and the power supply is turned on in the case that the massager portion is separated from the mouse, so that a required body position can be appropriately massaged by holding the massager portion.

However, in this structure, the parts construction of the mouse body is complicated, and the massager portion is completely separated from the mouse in the case that the massager portion is separated so as to massage the other positions than palms. Accordingly, the massager portion lacks necessity in the integration with the mouse, and is much restricted in its shape and installation of operational switches, so that this structure is not necessarily practicable.

The techniques in the Japanese Unexamined Patent Publication No. 10-133812 and the U.S. Patent Application Publication No. 2004/189606 are structured such that projections or projections and protrusions stimulate the palms, aim at pressing pressure points on the palm during a mouse operation in a state in which the palm is put on the mouse, and do not suppose that the mouse is lifted up and is applied to the massaging of the arms, the neck and the shoulders.

The technique in the U.S. Patent Application Publication No. 2006/192756 relates to a dedicated massage part which is connected to the mouse, and it is necessary to store the part as an independent body by detaching the part from the mouse in the case that the mouse is operated. Accordingly, there is a practical problem in simplification and risk of loss. Further, the power supply for the independent massager is obtained only by branching the power supply for the mouse body from a USB power supply.

Further, the techniques in the U.S. Patent Application Publication No. 2007/188451 and the Japanese Unexamined Patent Publication No. 2002-14769 are structured such that massaging positions are arranged at a plurality of positions which come into contact with the palm of a mouse body. The technique in the U.S. Patent Application Publication No. 2007/188451 is structured such that a vibrating mechanism which is arranged within a mouse body and is applied a USB power supply vibrates a shell (a casing) of a mouse, and the technique in the Japanese Unexamined Patent Publication No. 2002-14769 is structured such that an operating position for massaging the palm is actuated by working with mouse movement detection information. Both of the U.S. Patent Application Publication No. 2007/188451 and Japanese Unexamined Patent Publication No. 2002-14769 aim at the massaging of the palm during the mouse operation in a state in which the palm is put on the mouse, in the light of an operability, and do not suppose that the mouse is lifted up and is used for the arms, the neck and the shoulders.

### Means for Solving the Problems

The inventors of the present invention devote themselves to make a study of the restricted matters in the mouse integrated type provided by the known arts mentioned above, creates a technical idea which is not provided in the known art and succeeds in specifying the present invention.

The prior art is structured such that the massaging vibrator is arranged at the position which comes into contact with the palm, in the top surface of the mouse body, however, the top surface of the mouse body which is the computer input relevant device is essentially formed as an approximately convex shape for feeling of fitting to the palm. In the case that the convex position is intended to be applied to the other body positions than the palm so as to massage, the contact of the massager with the body positions lacks in sense of stability since the body positions are approximately formed as a convex shape for the most part. There is found that it is necessary to massage while holding a bottom surface portion or an end portion of the mouse with a hand for operating the massager, and a special structure which is different from the conventional mouse is necessary for a layout of control buttons in the massager, thereby causing a problem in the operation of the massager integrated type mouse.

The following basic structure of the invention is carried out by the inventors of the present invention for achieving the problems mentioned above. A bottom surface portion of a mouse body is depressed like a concave shape, and a massaging vibrator is arranged in a protruding manner in the concaved position in such a manner that the massaging vibrator does not protrude out of a bottom portion of the mouse, for preferably bringing the massaging vibrator into contact with an approximately convex body position mainly in the arms, the neck and the shoulders, while lifting up the mouse.

As a result, it is possible to hold the top surface of the mouse body by the hand in such a manner as to normally grip the mouse, bring the bottom surface portion of the mouse into contact with the arms, the neck and the shoulders while lifting up the mouse body, and use switches (which are normally arranged as a pair of right and left switches) of the mouse for operating the personal computer for operating the massager by operating a changeover switch for using the mouse as the massager.

The invention according to claim 1 of the present invention provides a massager integrated type optical computer mouse comprising:
a massaging vibrator;
a selection switch arranged in a main body of the computer mouse; and
operational switches of the computer mouse,
wherein a bottom surface portion of the computer mouse is formed so as to be depressed as a concave shape to the main body side while penetrating in a transverse direction,
wherein the massaging vibrator is arranged in a protruding manner at the concavely depressed position,
wherein any one of the operational switches is changed to a switch for turning on or off a power supply to the massaging vibrator, and changing a vibration pattern and a vibration strength of the massaging vibrator, by the selection switch,
wherein an operator brings the concavely depressed position of the computer mouse into close contact with an approximately convex body position so as to massage by operating the massaging vibrator while gripping the computer mouse by a palm.

The power supply to the massaging vibrator in the invention according to claim 1 is achieved by a USB power supply (a bus power) which is conventionally used as a power supply for the computer mouse or a battery which is embedded in the main body.

### Effect of the Invention

According to the present invention, the mouse can be used as the massager by bringing the concave depression in the bottom surface portion of the mouse into contact with the approximately convex body position to be massaged, and using the switch for operating the mouse, while holding the mouse by the palm in the same way of the mouse operation in the case of operating the personal computer, without necessity of any special complicated shape as the constructing element in comparison with the conventional mouse for operating the personal computer. As a result, in a daily personal computer using scene, the mouse body can be used as the mouse type massager easily and without feeling a delicacy about the circumference.

### BRIEF EXPLANATION OF THE DRAWINGS

Fig. 1 is a schematic view of a mouse and shows an embodiment according to the present invention;
Fig. 2 is an outline view as seen from a left side surface of the mouse and shows the embodiment according to the present invention; and
Fig. 3 is an outline view as seen from a bottom portion of the mouse and shows the embodiment according to the present invention.

### DETAILED DESCRIPTION OF PREFERRED EMBODIMENT

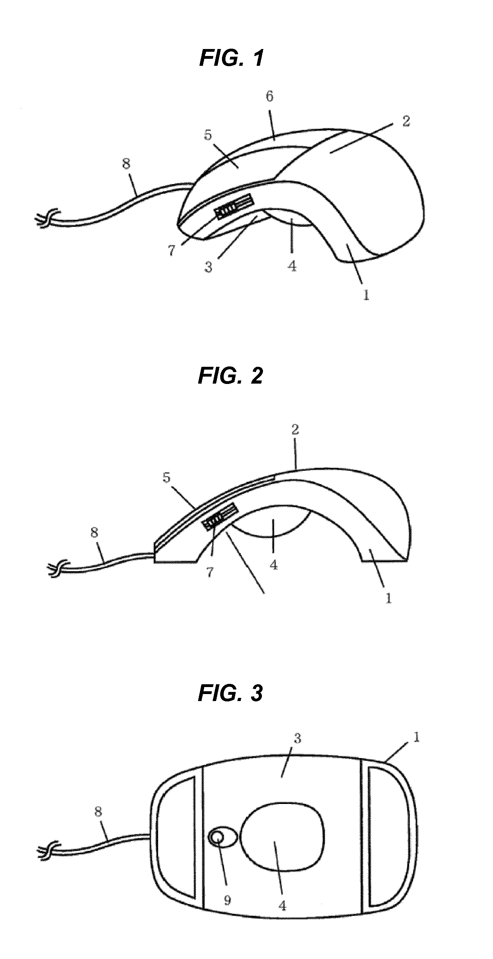

Fig. 1 shows an outer appearance of an embodiment of a mouse integrated with a massager according to the present invention. Fig. 2 is a view showing an outer appearance as seen from a left side surface of the embodiment according to the present invention, and Fig. 3 is a view showing an outer appearance as seen from a bottom portion of the same.

The mouse is a personal computer input device which is connected to a personal computer main body according to a USB connection system, and carries out an input operation by operating a cursor position on a monitor screen on the basis of movement in XY two axes of the mouse.

The mouse according to the present invention is normally structured such that a position forming a bottom surface portion of the mouse when the mouse is put on a flat surface, for example, a desk is formed as an approximately concavely depressed form by laterally piercing through an approximately center portion of the bottom surface portion while leaving a front side of the bottom surface portion and a rear side of the bottom surface portion in the mouse, and the concavely depressed portion is away from the flat surface.

A massaging vibrator is arranged in the approximately concave depression which is formed by piercing laterally in a protruding manner so as not to reach a bottom portion of the mouse body, and an optical type movement information detecting portion is arranged in a front portion or a rear portion of the massaging vibrator within the concave surface.

Generally, the optical type movement information detecting portion using infrared light is spaced from the flat surface on which the mouse is put, and reads the information while being in non-contact with the flat surface. In the present invention, the spaced distance is greater than that of the general mouse, however, the spaced distance is adjusted so that the mouse can serve as the mouse for the personal computer and can optically or electrically detect the necessary movement information.

Switches which can be respectively operated by a first finger and a middle finger are generally arranged in left and right sides in a front side of a top surface of the main body of the mouse, and the other top surface portion is formed by an approximately convex three-dimensional curved surface which can be easily gripped by a palm. In the present invention, a structure of the top surface of the main body may be set to the same as the general mouse.

On the other hand, a switch for selecting a function between the computer mouse and the massager is arranged at any position of the top surface of the mouse body, or any position of a side surface portion of the mouse, and any position of the bottom portion of the mouse.

The function selection switch may be achieved, for example, by a special operation (a simultaneous pushing operation) of a pair of right and left switches for operating the mouse, as long as any confusion is not brought about on the operation of the computer mouse, however, a sliding type selection switch is preferable for preventing an erroneous operation.

The mouse according to the present invention is structured such that an electric circuit is changed by changing over the function selection switch, for example, the left switch in the front side of the top surface of the mouse may be used as a switch for turning on and off a power supply of the massager, and the right switch may be used as a switch for changing over a vibration pattern of the massager.

As a matter of course, the electric circuit may be changed by utilizing a physical contact switch, or may be changed by an integrated circuit in which a logic circuit is embedded. In the present invention, any changing method may be employed as long as the operational switch of the personal computer mouse can be served as the switch for the massager by the selection switch.

Further, the circuit can be designed on the basis of combination of the other switch operations, such that the power supply is turned on and off, the vibration pattern is changed, and a vibration strength is changed up and down.

The vibration pattern of the massager can be changed achieved by an integrated circuit which stores on-off patterns of a motor in a vibration generating portion in the same manner as many general handy type massagers, and the previously stored vibration patterns can be changed such that the pattern is changed to the next pattern, for example, one on (click) operation of the right switch, in the example mentioned above, and continuously changed in a rotary manner every click operation.

In the same manner, in the case that the electric current supplied to the motor in the vibration generating portion of the massager is changed, for example, by long pressing any of the right and left switches, the strength of the massaging vibration can be changed.

These controls can be achieved by a dedicated integrated circuit design which is structured such that the mouse unique switches for operating the personal computer can be used as the switches for turning on and off the massaging vibrator, changing the vibration pattern and changing the vibration strength, in the case that the selection switch is changed to the massager function. These controls correspond to an effect which can be achieved by the present invention.

Further, in recent years, there is generally seen a structure in which a roller-like rotary switch for scrolling up and down the monitor screen is set in a protruding manner between the right and left switches in the front side of the top surface of the mouse. In this structure, the roller-like rotary switch can be used as a control switch of the massager by the function selection switch, on the basis of the technical idea of the present invention.

The massaging vibrator employs a part which can generate vibration on the basis of an eccentric rotation of the transducer in the same manner as the other massagers. At the present, there is an ultra small part using a compact motor which is formed as a cylindrical dimension and has a length of about 1 cm and a diameter of 1 cm or less. An outer surface of an elastic body such as a hard silicon rubber to which the compact vibrator is fitted is formed as a smooth protruding shape, and the position having the protruding shape is arranged so as to protrude to an approximately center portion of the concave surface in the bottom surface of the mouse. Further, the protruding portion and the concave depression portion may be molded integrally as one member as long as the function is not deteriorated.

The concave depression portion in the bottom portion of the mouse including the protruding portion which constructs a part of the massaging vibrator is pressed by the palm from the top surface portion of the mouse so as to be strongly brought into close contact with the body position to be massaged, as a matter of course. Accordingly, the concave depression shape is designed in its shape with such a curvature that the concave depression shape can come into close contact with a gentle curve of the body position, for example, the neck and the shoulders while being less inhibited, and is designed in its structure so that the position including the protruding portion and the shell (the casing) do not break even under exposure to the strong stress.

The mouse according to the present invention can serve as the massager by changing the selection switch in addition to the general mouse function, and does not expect a matter that both the functions are simultaneously achieved. According to an actual condition that the mouse is used, the system for changing both the functions is sufficient and a problem in the use of the personal computer is prevented from being generated by the erroneous operation.

The electric power necessary for the optical type mouse is of course different from the electric power necessary for the massager. In the present invention, the inventors have confirmed the fact that the massaging vibrator can sufficiently generate the necessary vibration as long as the rated power (5 V/500 mA which is a bus power rating of a USB port) of the USB power supply supplied from the personal computer main body according to the USB connection system can be used. Therefore, it is conceivable that the mouse for the personal computer selects circuits, electronic parts and electric wirings in correspondence to a difference in an electric power consumption between the mouse for the personal computer and the massager, as a matter of course.

According to the circumstances, in the case that the greater power supply is demanded, or in the case of a cable-less type mouse of a wireless type ("BLUETOOTH" (trademark) type) which is increased in recent years, an electric power can be supplied by mounting a battery, for example, a dry cell or a chargeable compact lithium ion cell into the mouse body.

The USB cable connecting the mouse body and the personal computer main body is frequently coupled generally to the center of the front side surface of the mouse body in a fixing manner, however, in the case that the mouse is selectively used as the massager according to the present invention, it is convenient in operation that the cable is coupled to the rear side surface of the mouse body. This is a problem which can be dissolved, for example, previously connecting the USB cable to the rear side surface of the mouse body, however, the cable may be in contact with a wrist portion in the computer mouse mode. It is an optional design matter whether an operability of the computer mouse or an operability of the massager is weighted, and the cases that the cable is connected to any of the front, rear, right or left sides are included in the present invention.

In addition, a material of the shell (the casing) of the mouse according to the present invention is an optional design matter in the same manner as mentioned above, and the selection of the material does not affect greatly the operations and effects of the present invention as long as the strength correspondence mentioned in the paragraph 0039 can be achieved structurally.

Further, a decorative structure may be added to the structure of the mouse according to the present invention, for example, by LED electric spectaculars, or an ergonomic creation may be added to the structure of the mouse according to the present invention in a shape design, without affecting the technical idea of the present invention.

Further, it is of course conceivable that a carrying property to the remote place is improved, and the massage function of the mouse according to the present invention is operated by a software of the personal computer main body or the other portable type information device without depending on the switch of the mouse, in the mouse which is connected to the personal computer main body, for example, by wireless. It goes without saying that both cases are no more than a partial use of the present invention as long as they are based on the structure of the mouse according to the present invention.

## Claims

1. A massager integrated type optical computer mouse comprising:
a massaging vibrator;
a selection switch arranged in a main body of the computer mouse; and
operational switches of the computer mouse,
wherein a bottom surface portion of the computer mouse is formed so as to be depressed as a concave shape to the main body side while penetrating in a transverse direction,
wherein the massaging vibrator is arranged in a protruding manner at the concavely depressed position,
wherein any one of the operational switches is changed to a switch for turning on or off a power supply to the massaging vibrator, and changing a vibration pattern and a vibration strength of the massaging vibrator, by the selection switch,
wherein an operator brings the concavely depressed position of the computer mouse into close contact with an approximately convex body position so as to massage by operating the massaging vibrator while gripping the computer mouse by a palm.
